# EUROPEAN PATENT APPLICATION

(11) **EP 2 148 539 A1**
(43) Date of publication of application: **27.01.2010**
(21) Application number: 09166110.8
(22) Date of filing: 22.07.2009
(51) Int. Cl.: H04W 36/08, H04W 36/02, H04W 92/20

(54) **Communication system, base transceiver station, mobile station, and data transfer method for performing a handover between first and second base transceiver stations**

(30) Priority: 23.07.2008 JP 2008190218
(71) Applicant: Fujitsu Limited, Kawasaki-shi, Kanagawa 211-8588 (JP)
(72) Inventor: Kunugi, Takeshi, Kawasaki-shi, Kanagawa 211-8588 (JP); Sasaki, Yoshimi, Kawasaki-shi, Kanagawa 211-8588 (JP)
(74) Representative: Holtby, Christopher Lawrence

(57) **Abstract**

A communication system that includes a plurality of base transceiver stations and a mobile station, the communication system including a second base transceiver station that broadcasts identification information to be used to specify the second base transceiver station itself, a mobile station that receives the identification information (IP address) that has been broadcasted from the second base transceiver station and transfers said information to a first base transceiver station serving the mobile station, and the first base transceiver station that specifies the second base transceiver station as a handover target of the mobile station based on the identification information transferred from the mobile station.

## Description

### FIELD

The present invention relates to a communication system, a base transceiver station, a mobile station, and a data transfer method.

### BACKGROUND

There is a method for data packet transport in radio communication systems using an internet protocol (IP). For example, in the Japanese translation of PCT international application No. 2005-536902, a multicast tree is formed between nodes through a neighboring router. The multicast tree forms a tunnel through which broadcast content is transmitted. A broadcast message is encapsulated into an IP packet to be transmitted through the multicast tree. At least one multicast tree is formed between an internet part of the system, such as an access network, and a radio part of the system. An external multicast tree is formed between a content source and a packet data service node. An internal multicast tree is formed between the packet data service node and a packet control function node.

Moreover, there is a mobile communication system proposed which provides map information based on location information of a mobile station. For example, in Japanese Laid-Open Patent Publication No. 10-13961, each mobile station includes a location information detection means that detects location information, a location information transmission means that transmits the location information to an information center, an upload data transmission means that transmits upload data to the information center, and an information/service using means that uses information/service from the information center. The information center includes a storage means that stores the information/service, a retrieval means that receives the location information from the mobile station and retrieves the information/service stored in the storage means, a storage control means that stores upload data in the storage means, and an information/service transmission means that obtains and transmits the information/service, retrieved by the retrieval means, to the mobile station.

The above-described technique is not used to establish a link between a source base station and a target base station when a mobile station performs a handover between the base stations. Furthermore, the technique does not give information of the source base station, which is desired to establish a link, through the mobile station to the source base station at the time of establishing the link between the source base station and the target base station.
It is an aspect of the present invention to provide a communication system in which a source base station specifies a target base station, and then a link is established between the source base station and the target base station, a base transceiver station, mobile station, and a data transfer method.

### SUMMARY

According to an aspect of the invention, a communication system includes a plurality of base transceiver stations and a mobile station. The communication system includes a second base transceiver station that broadcasts identification information to be used to specify the second base transceiver station itself, a mobile station that receives and transfers the identification information that has been broadcasted from the second base transceiver station, and a first base transceiver station that specifies the second base transceiver station as a handover target of the mobile station based on the identification information transferred from the mobile station.
The advantages of the invention may be realized and attained by means of the elements and combinations particularly pointed out in the claims.
It is to be understood that both the foregoing general description and the following detailed description are exemplary and explanatory and are not restrictive of the invention, as claimed.

### BRIEF DESCRIPTION OF THE DRAWINGS

FIG.1 is an explanatory diagram illustrating an overview of a communication system according to an embodiment of the invention,
FIG.2 is a block diagram illustrating a configuration of an eNodeB according to the embodiment,
FIG.3 is a block diagram illustrating a configuration of user equipment according to the embodiment,
FIG.4 is an explanatory diagram illustrating an example of a configuration of broadcast information,
FIG.5 is an explanatory diagram illustrating an example of a configuration of a Measurement Report signal,
FIG.6 is a flowchart illustrating an operation of the user equipment at the time of receiving the broadcast information according to the embodiment,
FIG.7 is a flowchart illustrating an operation of the user equipment at the time of a handover according to the embodiment,
FIG.8 is a flowchart illustrating an operation of a source eNodeB at the time of a handover according to the embodiment,
FIG.9 is a flowchart illustrating an operation of a target eNodeB at the time of a handover according to the embodiment, and
FIG.10 is a sequence diagram illustrating processing procedure of a communication system at the time of a handover according to the embodiment.

### DESCRIPTION OF EMBODIMENTS

With reference to the accompanying diagrams, detailed description will be made below of a preferred embodiment of the communication system, the eNodeB, the user equipment, and the data transfer method.

### (Overview)

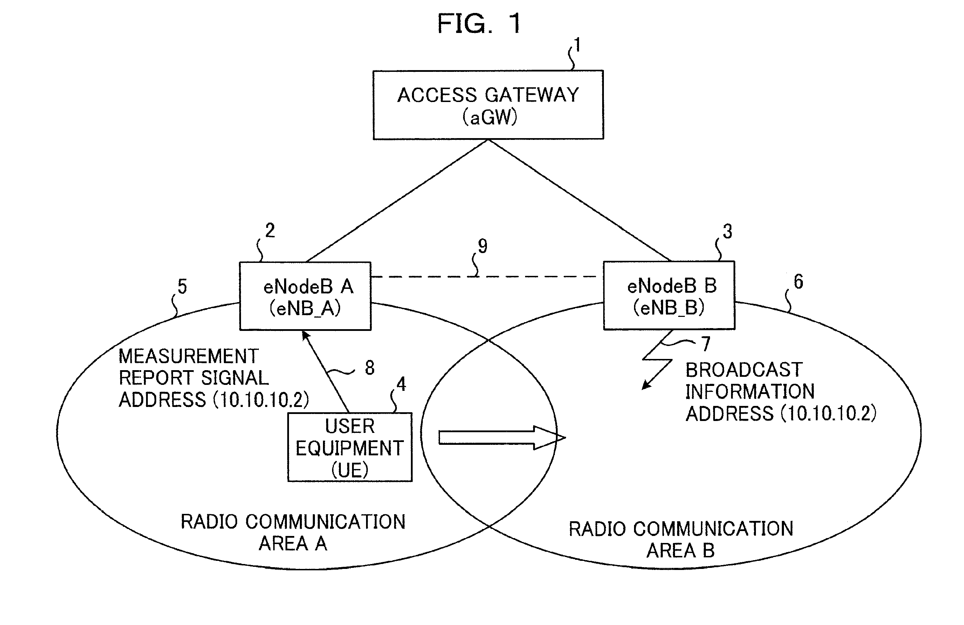

FIG.1 is an explanatory diagram illustrating an overview of a communication system according to the embodiment. In FIG.1, numeral 1 indicates an access gateway (aGW) that controls a plurality of eNodeBs (eNB). Numerals 2 and 3 indicate eNodeBs (eNB). Numeral 4 indicates user equipment (UE). Furthermore, an eNodeB may also be referred to as a "base transceiver station," and user equipment is also referred to as a "mobile station." Numerals 5 and 6 indicate radio communication areas covered by each eNodeB. The eNodeB has identification information used to specify itself and broadcasts the identification information with broadcast information. When direct transmission and reception of data between the eNodeBs are not desired, a link directly connecting the eNodeBs is not established. The link directly connecting the eNodeBs is a link that connects the eNodeBs without an access gateway.

In this case, when the user equipment 4 performs a handover between the eNodeBs, the area that includes the source eNodeB (the first eNodeB) and the radio communication area of the source eNodeB is a radio communication area A5, and the area that includes the target eNodeB (the second eNodeB) and the radio communication area of the target eNodeB is a radio communication area B6. Furthermore, the identification information may be, for example, an Internet Protocol (IP) address. When the user equipment 4 located in the radio communication area A5 enters an area where the broadcast information of an eNodeB B3 can be received, the user equipment 4 receives broadcast information 7 and obtains the IP address of the eNodeB B3. At the time of the handover from an eNodeB A2 to the eNodeB B3, the user equipment 4 transfers, to the eNodeB A2, the IP address of the eNodeB B3, including the IP address of the eNodeB B3 in a handover request, for example, in a Measurement Report signal 8.

The eNodeB A2 specifies a handover target eNodeB B3 based on the transferred IP address, and then establishes an SCTP link 9 between the eNodeB A2 and the eNodeB B3 through a network (not illustrated). The SCTP link 9 directly connects the eNodeB A2 to the eNodeB B3. The eNodeB A2 transfers the data to be transmitted to the user equipment 4 to the eNodeB B3 through the SCTP link 9. The eNodeB B3 transmits the data transferred from the eNodeB A2 to the user equipment 4 and continues the radio communication with the user equipment 4.

### (Configuration of eNodeB)

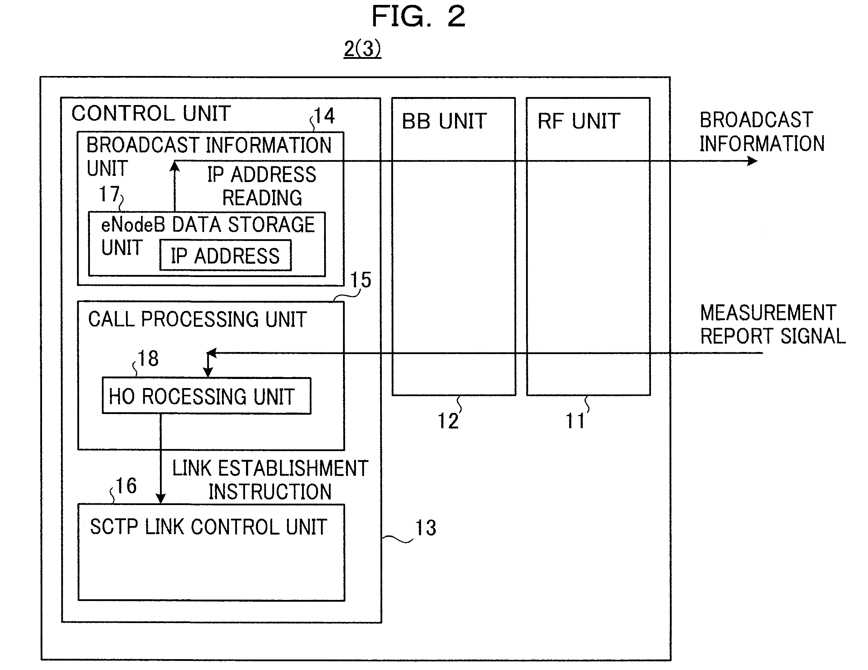

FIG.2 is a block diagram illustrating a configuration of an eNodeB according to the embodiment. As illustrated in FIG.2, the eNodeB A2 (the eNodeB B3) includes an RF unit 11 that modulates a baseband signal and demodulates a radio high-frequency signal, a baseband unit (a BB unit) 12 that processes the baseband signal, and a control unit 13 that controls the entire eNodeB. The control unit 13 includes a broadcast information unit 14 that generates broadcast information, a call processing unit 15 that performs call processing, and a Stream Control Transmission Protocol (SCTP) link control unit 16 that controls the establishment of a link between eNodeBs.

The broadcast information unit 14 stores the IP address used to specify the eNodeB A2 itself in an eNodeB data storage unit 17. The broadcast information unit 14 reads the IP address from the eNodeB data storage unit 17 and sets the IP address to the broadcast information. The eNodeB A2 (the eNodeB B3) transmits the broadcast information from an antenna (not illustrated) through the baseband unit 12 and the RF unit 11.

The eNodeB A2 (the eNodeB B3) receives a Measurement Report signal via the antenna (not illustrated). A handover processing unit (a HO processing unit) 18 of the call processing unit 15 receives the Measurement Report signal through the RF unit 11 and the baseband unit 12, and then outputs a link establishment instruction. The SCTP link control unit 16 receives a link establishment instruction, specifies the eNodeB to be a handover target based on the IP address included in the Measurement Report signal, and controls establishment of the link between the eNodeBs. The eNodeB A2 (the eNodeB3) transfers user data to another eNodeB through the established link. The RF unit 11, the baseband unit 12, and the control unit 13 conduct processing as a user data transfer unit.

### (Configuration of user equipment)

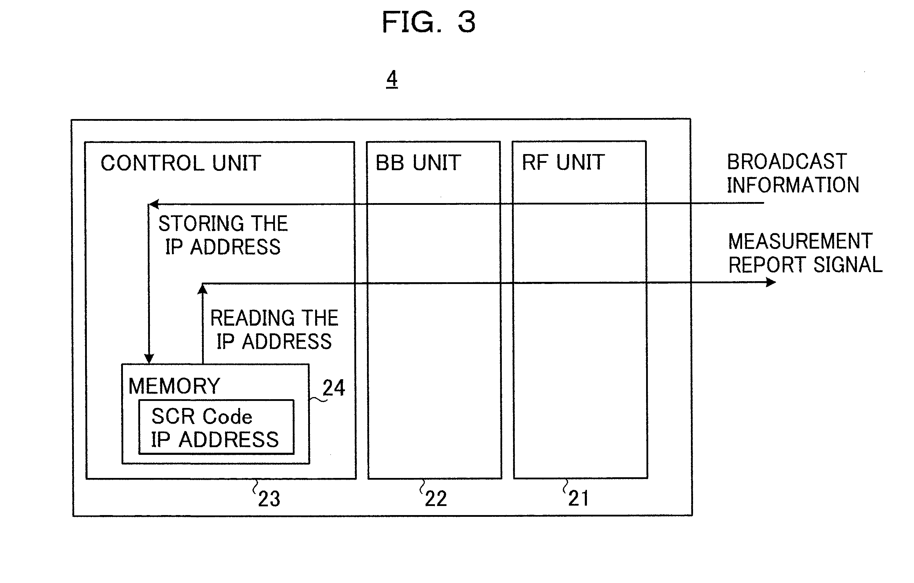

FIG.3 is a block diagram illustrating a configuration of user equipment according to the embodiment. As illustrated in FIG.3, as with the eNodeB, the user equipment 4 includes a RF unit 21, a baseband unit (the BB unit) 22, and a control unit 23. The user equipment 4 receives the broadcast information via the antenna (not illustrated). The control unit 23 receives the broadcast information through the RF unit 21 and the baseband unit 22, and stores the IP address, included in the broadcast information, in a memory 24 of the control unit 23.

The control unit 23 reads the IP address from the memory 24 and sets the IP address to the Measurement Report signal. The user equipment 4 transmits the Measurement Report signal from the antenna (not illustrated) through the baseband unit 22 and the RF unit 21. The RF unit 21, the baseband unit 22, and the control unit 23 conduct processing as a transmission unit that generates and transmits a signal that includes an IP address.

### (Configuration of broadcast information)

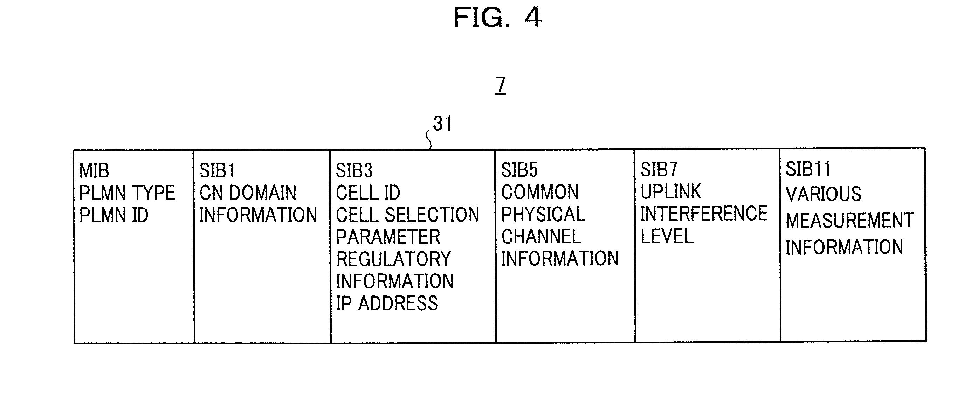

FIG.4 is an explanatory diagram illustrating an example of a configuration of broadcast information. As illustrated in FIG.4, the IP address of the eNodeB itself may be set in, for example, a system information block (SIB3) 31 in the broadcast information 7. The IP address may also be set in another system information block.

### (Configuration of Measurement Report signal)

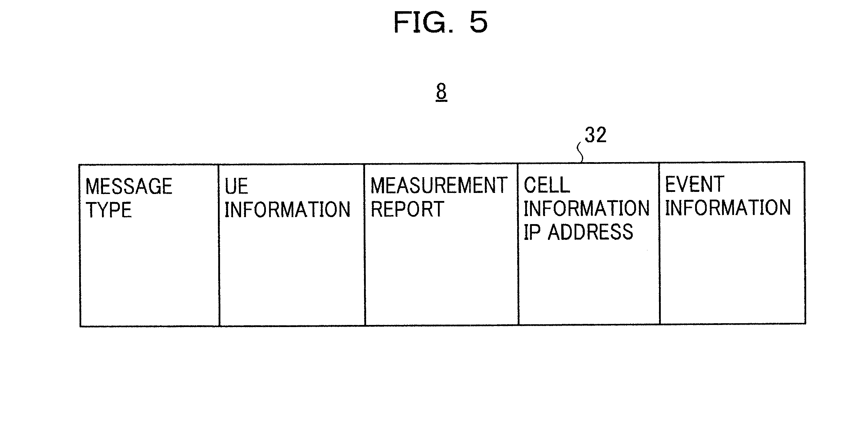

FIG.5 is an explanatory diagram illustrating an example of a configuration of a Measurement Report signal. As illustrated in FIG.5, the IP address of the handover target eNodeB may be set in, for example, a cell information field 32 in the Measurement Report signal 8. The IP address may also be set to another field.

(Operation of user equipment at the time of receiving broadcast information)

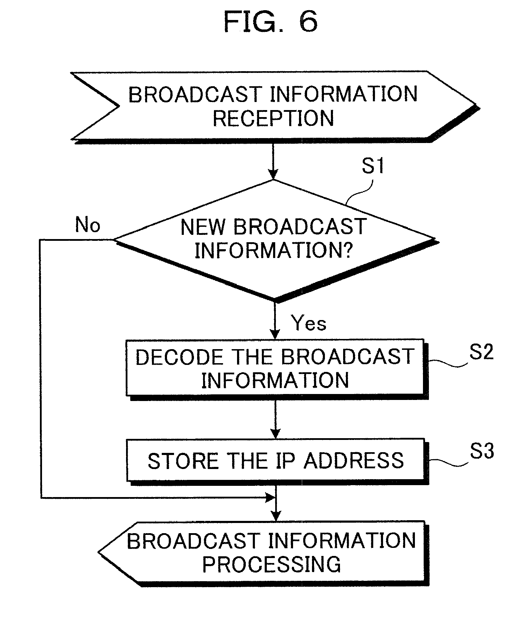

FIG.6 is a flowchart illustrating an operation of the user equipment at the time of receiving broadcast information. As illustrated in FIG.6, the user equipment 4 receives the broadcast information and determines whether or not the broadcast information is new (step S1). If the broadcast information is new (step S1: Yes), the user equipment 4 decodes the broadcast information and obtains the IP address of the eNodeB (the eNodeB B3) (step S2). Then the user equipment 4 stores the IP address in the memory 24 (step S3), and performs given broadcast information processing. On the other hand, if the received broadcast information is not new (step S1: No), the user equipment 4 performs the given broadcast information processing without decoding the broadcast information or storing the IP address.

### (Operation of user equipment at the time of requesting handover)

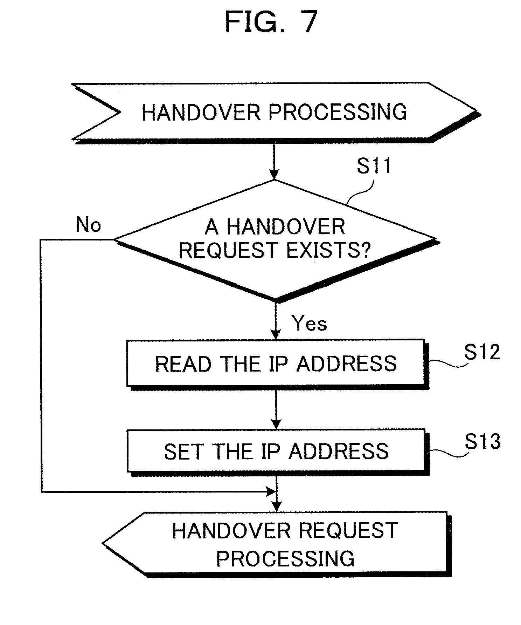

FIG.7 is a flowchart illustrating an operation of user equipment at the time of a handover according to the embodiment. As illustrated in FIG.7, the user equipment 4 determines the existence or non-existence of the handover request based on, for example, the reception power to a plurality of eNodeBs (the eNodeB A2 and the eNodeB B3) at the time of a handover to the other eNodeB (the eNodeB3) (step S11). If there is a handover request (step S11: Yes), the user equipment 4 reads the IP address of the handover target eNodeB (the eNodeB B3) from the memory 24 (step S12). Then the user equipment 4 sets the IP address in the Measurement Report signal (step S13) and performs a given handover request processing. On the other hand, if there is no handover request (step S11: No), the user equipment 4 performs the given handover processing without reading and setting the IP address.

### (Operation of source eNodeB at the time of handover)

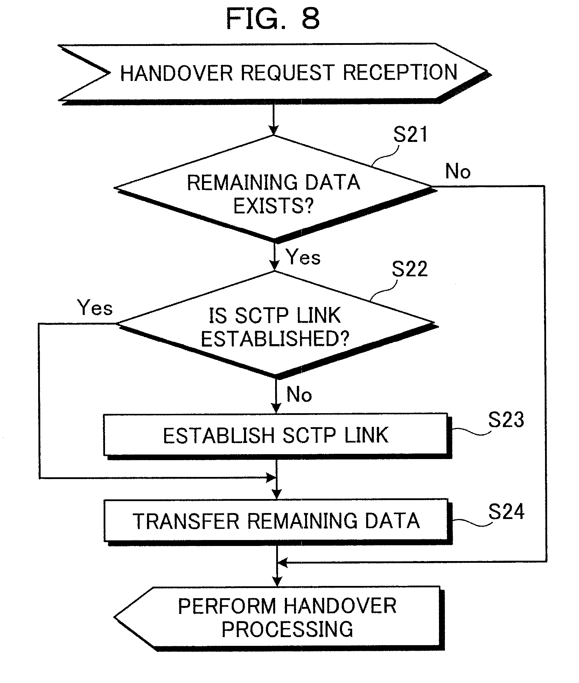

As illustrated in FIG.8, the source eNodeB A2 receives the handover request (the Measurement Report signal 8) from the user equipment 4, and then determines the existence or non-existence of remaining user data (step S21). If there is any remaining user data (step S21: Yes), the eNodeB A2 determines whether or not the link is established between the source eNodeB A2 and the handover target eNodeB B3 (destination) based on the IP address that is set in the Measurement Report signal 8 received from the user equipment 4 (step S22).

If the link is not established (step S22: No), the source eNodeB A2 establishes, for example, an SCTP link 9 between the source eNodeB A2 and the handover target eNodeB B3 (step S23). Then the source eNodeB A2 transfers the remaining user data to the handover target eNodeB B3 through the SCTP link 9, which is established in step S23 (step S24), or the SCTP link 9 if the SCTP link 9 has already been established (step S22: Yes), and then performs the given handover processing. On the other hand, if there is no remaining user data (step S21: No), the source eNodeB A2 performs the given handover processing without establishing a link or transferring data between the eNodeBs.

### (Operation of target eNodeB at the time of handover)

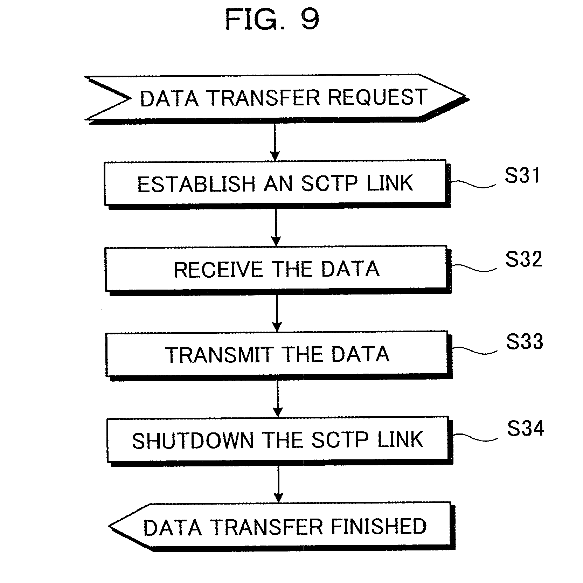

FIG.9 is a flowchart illustrating an operation of the target eNodeB at the time of a handover according to the embodiment. As illustrated in FIG.9, the handover target eNodeB B3 receives a request to transfer the user data from the source eNodeB A2, and establishes an SCTP link 9 between the handover target eNodeB B3 and the source eNodeB A2 in accordance with a request to establish the SCTP link from the source eNodeB A2 (step S31). The handover target eNodeB B3 receives the user data from the source eNodeB A2 through the SCTP link 9 (step S32), and then transmits the data to the user equipment 4 (step S33). After the transmission and reception of the data between the handover target eNodeB B3 and the source eNodeB A2, the handover target eNodeB B3 shuts down the SCTP link 9 between the handover target eNodeB B3 and the source eNodeB A2 in accordance with a request to shut down the SCTP link from the source eNodeB A2 (step S34), and then finishes the data transfer.

### (Processing procedure at the time of handover)

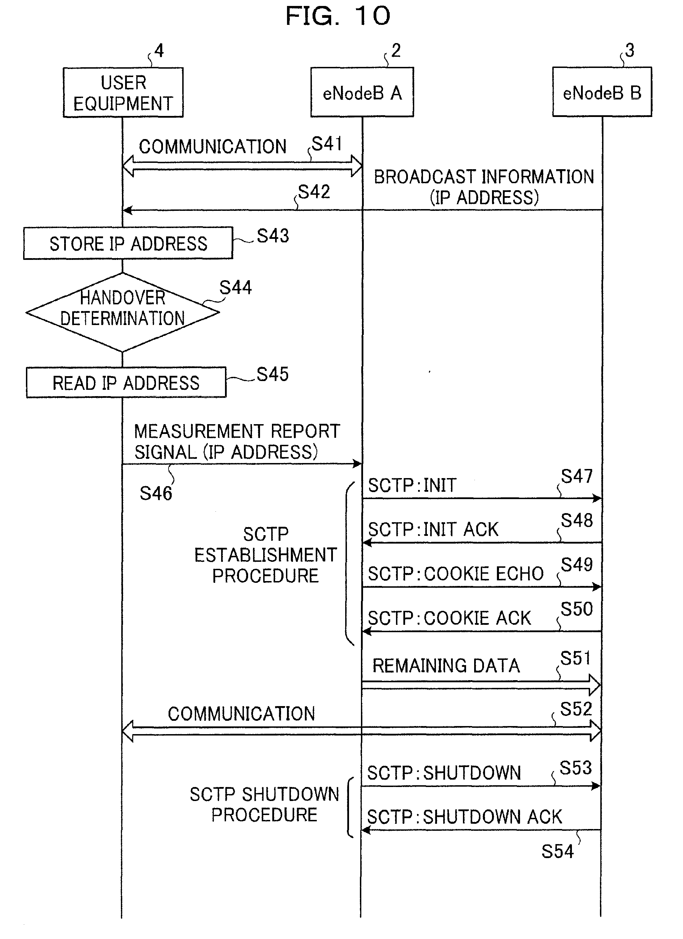

FIG.10 is a sequence diagram illustrating a processing procedure of a communication system at the time of a handover in the communication system according to the embodiment. As illustrated in FIG.10, while the user equipment 4 communicates with the eNodeB A2 in the radio communication area A5 (step S41), when the user equipment 4 receives the broadcast information 7 of the eNodeB B3 (step S42), the user equipment 4 stores, in the memory 24, the IP address of the eNodeB B3 included in the broadcast information 7 (step S43). The eNodeB B3 steadily broadcasts the broadcast information 7 in which the IP address of the eNodeB B3 itself is set. Then the user equipment 4 determines whether or not to perform the handover from the eNodeB A2 to the eNodeB B3 (step S44). For example, if the reception power for the eNodeB A2 is larger than the reception power for the eNodeB B3, the user equipment 4 determines to perform the handover to the eNodeB B3, and determines not to perform the handover in the reverse case.

If the user equipment 4 determines to perform a handover, the user equipment 4 reads the IP address of the eNodeB B3 from the memory 24 (step S45). The user equipment 4 sets the IP address in the Measurement Report signal 8 and transmits the Measurement Report signal 8 to the eNodeB A2 (step S46). The eNodeB A2 specifies the eNodeB B3 based on the IP address obtained from the user equipment 4. If the SCTP link 9 is not already established between the eNodeB A2 and the eNodeB B3, the SCTP link 9 is established according to the following procedure.

In the SCTP establishment procedure, the eNodeB A2 firstly transmits an Initiation (INIT) message to the eNodeB B3 (step S47). In response, the eNodeB B3 returns an Initiation Acknowledgment (INIT ACK) message to the eNodeB A2 (step S48). Next, the eNodeB A2 transmits a COOKIE ECHO message to the eNodeB B3 (step S49). In response, the eNodeB B3 returns a Cookie Acknowledgement (COOKIE ACK) message to the eNodeB A2 (step S50), and then the SCTP link is established between the eNodeB A2 and eNodeB B3. When the eNodeB A2 receives the Measurement Report signal 8 from the user equipment 4, the SCTP establishment processing from step S47 to step S50 is not performed if the SCTP link has already been established between the eNodeB A2 and the eNodeB B3. As an SCTP port, a well-known port is used.

The eNodeB A2 transfers the user data remaining in the eNodeB A2 to the eNodeB B3 through the SCTP link 9 established between the eNodeB A2 and the eNodeB B3 (step S51). Then the communicating party of the user equipment 4 is switched from the eNodeB A2 to the eNodeB B3. The user equipment 4 continues the communication with the eNodeB B3 (step S52). After that, if the eNodeB A2 receives the handover request addressed to the eNodeB B3 from another user equipment in the radio communication area A5, the user data remaining to be transmitted to this user equipment in the eNodeB A2 is transferred to the eNodeB B3. If the eNodeB A2 does not receive a handover request from another user equipment, the eNodeB A2 shuts down the SCTP link 9 according to the following procedure.

In SCTP shutdown procedure, the eNodeB A2 firstly transmits a SHUTDOWN message to the eNodeB B3 (step S53). In response, the eNodeB B3 returns a Shutdown Acknowledgment (SHUTDOWN ACK) message to the eNodeB A2 (step S54). Consequently, the SCTP link 9 between the eNodeB A2 and the eNodeB B3 is shut down, and the handover from the eNodeB A2 to the eNodeB B3 is completed. Accordingly, when the user equipment 4 performs a handover between the eNodeBs, the SCTP link 9 may be established between the source eNodeB A2 and the handover target eNodeB B3. The user data remaining in the eNodeB A2 may be transferred to the handover target eNodeB B3 from the source eNodeB A2 through the SCTP link 9.

Furthermore, the SCTP link 9 between the eNodeBs is established only when necessary, for example, when the remaining user data is transferred at the time of a handover. The SCTP link 9 is not established between the eNodeBs when unnecessary. Thus, the load of the eNodeBs is reduced. The SCTP link 9 may be monitored and controlled while the SCTP link 9 is always established between the eNodeBs. However, such monitoring and controlling may be unnecessary because the SCTP link 9 is established only when desired. Furthermore, since each eNodeB is not required to hold eNodeB data (such as an IP address and an SCTP port) related to the adjacent eNodeBs, generation and management of the eNodeB data may be easily performed in each eNodeB. Furthermore, since each eNodeB does not save the eNodeB data related to the adjacent eNodeBs, changes in the configuration of the system due to increasing and decreasing the eNodeBs may be handled more easily.

According to the communication system, the eNodeB, the user equipment, and the data transfer method, the identification information of the target eNodeB (the second eNodeB) is transmitted to the source eNodeB (the first eNodeB) through the user equipment. This allows the source eNodeB to specify the target eNodeB based on the identification information.

According to the communication system, the eNodeB, the user equipment, and the data transfer method, when the user equipment performs handover between the eNodeBs, the source eNodeB may specify the target eNodeB and establish a link between the source eNodeB and the target eNodeB.
All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the spirit and scope of the invention.
In any of the above aspects, the various features may be implemented in hardware, or as software modules running on one or more processors. Features of one aspect may be applied to any of the other aspects.
The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A communication system that includes a plurality of base transceiver stations and a mobile station, comprising:
a second base transceiver station that broadcasts identification information to be used to specify the second base transceiver station itself;
a mobile station that receives and transfers the identification information that has been broadcasted from the second base transceiver station; and
a first base transceiver station that specifies the second base transceiver station as a handover target of the mobile station based on the identification information transferred from the mobile station.

2. The communication system according to claim 1, wherein a link is established between the second base transceiver station specified based on the identification information and the first base transceiver station.

3. The communication system according to claim 2, wherein data is transferred from the first base transceiver station to the second base transceiver station through the link.

4. The communication system according to claim 3, wherein the link is shut down after the data is transferred.

5. A base transceiver station comprising:
identification information to be used to specify the base transceiver station itself; and
a broadcast information unit that generates and broadcasts broadcast information that includes the identification information.

6. The base transceiver station according to claim 5, further comprising:
a link control unit that specifies a base transceiver station as a handover target of the mobile station based on the identification information included in a signal received from the mobile station, and then controls establishment of the link between the base transceiver station and the handover target base transceiver station.

7. The base transceiver station according to claim 6, further comprising:
a data transfer unit that transfers data to the handover target base transceiver station through the link established between the base transceiver station and the handover target base transceiver station.

8. The base transceiver station according to claim 7, wherein the link control unit shuts down the link after the data is transferred.

9. A mobile station comprising:
a storage unit that stores identification information included in broadcast information broadcasted from a second base transceiver station as a handover target of the mobile station; and
a transmission unit that, when the second base transceiver station is a handover target, reads the identification information stored in the storage unit, generates a transmission target signal that includes the identification information, and transmits the generated transmission target signal to a first base transceiver station in a radio connection.

10. A data transfer method, wherein when a mobile station performs a handover from a first base transceiver station to a second base transceiver station, the data that the first base transceiver station has is transferred to the second base transceiver station, and wherein the data transfer method comprises:
broadcasting, by the second base transceiver station, identification information to be used to specify the second base transceiver station itself;
receiving and transferring, by the mobile station, the identification information has been broadcasted from the second base transceiver station;
specifying, by the first base transceiver station, the second base transceiver station based on the identification information transferred from the mobile station;
establishing a link between the second base transceiver station and the first base transceiver station; and
transferring data from the first base transceiver station to the second base transceiver station through the link.

11. The data transfer method according to claim 10, further comprising shutting down the link after the data is transferred.
